# EUROPÄISCHE PATENTSCHRIFT

(11) **EP 1 970 787 B1**
(45) Veröffentlichungstag und Bekanntmachung des Hinweises auf die Patenterteilung: **19.11.2014**
(21) Anmeldenummer: 08002132.2
(22) Anmeldetag: 05.02.2008
(51) Int. Cl.: G05D 16/18, F15B 11/028, F15B 13/02, F16K 17/04

(54) **Druckregel-Sitzventil**
Pressure control seat valve
Soupape à siège à réglage de pression

(30) Priorität: 16.03.2007 EP 07005514
(43) Veröffentlichungstag der Anmeldung: 17.09.2008
(73) Patentinhaber: HAWE Hydraulik SE, 81673 München (DE)
(72) Erfinder: Neumair, Georg, 85402 Thalhausen (DE)
(74) Vertreter: Grünecker, Kinkeldey, Stockmair & Schwanhäusser

(56) Entgegenhaltungen:
- EP-A1- 0 624 745
- DE-A1-102005 008 763

## Beschreibung

Die Erfindung betrifft ein Druckregel-Sitzventil gemäß Oberbegriff des Patentanspruchs 1.

Aus EP 0 829 794 A und EP 0 955 472 A bekannte Druckregel-Sitzventile sind Zweiwege-Ventile, die wegen der Sitzventilbauweise kostengünstig herstellbar und zuverlässig, und in der Absperrstellung leckagefrei dicht sind. Ein möglicher Einsatzfall solcher Druckregel-Sitzventile sind Steuersysteme in Werkzeugmaschinen, beispielsweise für Spannvorrichtungen, bei welchen ein Abschaltbetrieb zweckmäßig ist, d.h., eine Versorgungspumpe nur bei Bedarf läuft. Der Abschaltbetrieb ist eine erheblich Energie sparende Maßnahme, bedingt jedoch unbedingt eine leckagefreie Absperrstellung, d.h. ein Druckregel-Sitzventil. Die Regelung des Druckregel-Sitzventils auf den an der Regelfeder eingestellten Regeldruck beginnt, wenn im Regeldruckanschluss der Regeldruckwert nahezu erreicht ist, der Regelkolben gegen die Regelfeder verfährt und das Hauptschließglied dabei den Hauptsitz allmählich abdrosselt und dann absperrt. Sobald der Regeldruck unterschritten wird, drückt die Regelfeder über den nachgebenden Regelkolben das Hauptschließglied wieder vom Hauptsitz ab, bis der Regeldruck wieder erreicht ist. Wenn jedoch in der Absperrstellung der Regeldruck, z.B. temperaturbedingt, von der Seite des Verbrauchers, über den eingestellten Wert ansteigt, bleibt das Druckregel-Sitzventil blockiert. Der überhöhte Druck kann einen Schaden verursachen, z.B. in einer Spannvorrichtung oder an einem Werkstück. Ist das Druckregel-Sitzventil, wie üblich, mit einem Druckschalter kombiniert, der einer übergeordneten Steuerung das Erreichen des Regeldrucks mit einem Signal meldet, damit die Steuerung weitere Schritte veranlasst, liefert dieses Signal bei überhöhtem Regeldruck nicht korrekt, weil die Steuerung weder die Fehlerkondition erfährt noch reagieren kann.

Um eine solche Regeldrucküberhöhung zu vermeiden, ist es bekannt, in Steuersystemen z. B. von Spannvorrichtungen, ein Dreiwege-Druckregelventil einzusetzen, das bei einer verbraucherseitigen Regeldruckerhöhung solange Druckmittel in einen Ablassanschluss ablässt, bis der Regeldruck wieder stimmt. Solche Dreiwege-Druckregel-Ventile, z. B. des Typs ADM 1 K-15, der Firma HAWE Hydraulik GmbH & Co. KG, München, sind ferner als Sitzventil und sind Schieberventile, die den für Spannvorrichtungen mit Abschaltbetrieb gravierenden Nachteil einer baulich bedingten Leckage haben. Sie sind deshalb für Steuersysteme, z.B. für im Abschaltbetrieb arbeitende Spannvorrichtungen, nur bedingt brauchbar sind, da der Druck in Abschaltzeiten nicht gehalten wird.

Es ist ferner zur Beseitigung dieses Problems eine technische Improvisation bekannt, bei der ein Druckregel-Sitzventil, beispielsweise der EP 0 829 794 A oder EP 0 955 472 A, mit einem parallelen, leckagefrei absperrenden Druckminder-Sitzventil kombiniert wird, das einen Strömungspfad zu einem Ablassanschluss öffnet, wenn der Regeldruck überschritten wird. Da das Druckminder-Sitzventil eine eigene Regelfeder benötigt, sind zum Verstellen des Regeldrucks Einstellungen an zwei Regelfedern erforderlich, was zeitaufwändig und mühsam ist, da sich die Regelfedereinstellungen gegenseitig beeinflussen. Außerdem lässt sich ein solches Druckregel-Sitzventil nur schwierig als Einschraubventil oder Einschraubpatrone baulich mit einem Druckminder-Sitzventil kombinieren.

Weiterer Stand der Technik ist enthalten in DE 10 2005 008 763 A1 und EP 0 624 745 A1.

Der Erfindung liegt die Aufgabe zugrunde, ein Druckregel-Sitzventil der eingangs genannten Art anzugeben, das für Abschaltbetrieb geeignet ist, d.h. in der Absperrstellung keine Leckage hat, bei dem das Überschreiten des eingestellten Regeldrucks ausgeschlossen ist, und das nur eine einzige Einstellmöglichkeit benötigt.

Die gestellte Aufgabe wird mit den Merkmalen des Patentanspruchs 1 gelöst.

Durch die Integration des Strömungsweges zum Ablassanschluss und des Ablassventils in Sitzventilbauweise in den Strömungsweg, und mit der sowohl für das Ablassventil als auch das Hauptsitzventil wirkenden, einzigen Regelfeder liegt ein Dreiwege-Druckregel-Sitzventil vor, das zur Regeldruckeinstellung nur eine einzige Einstellmöglichkeit, nämlich für die Vorspannung der Regelfeder, benötigt. Dieses Druckregel-Sitzventil ist baulich einfach und funktionssicher. Der Regelkolben betätigt sowohl das Hauptsitzventil als auch das Ablassventil. Das Ablassventil lässt sich einfach in das Druckregel-Sitzventil eingliedern, so dass für dieses sogar eine platzsparende Einschraubpatronen-Bauweise möglich ist. Dank der Sitzventilbauweise sowohl des Hauptsitzventils als auch des Ablassventils ist das Druckregel-Sitzventil in Steuersystemen verwendbar, die im Abschaltbetrieb arbeiten und bei denen in Abschaltpausen der Druck gehalten werden muss.

Das Ablassventil weist bei einer Ausführungsform ein federbelastetes Schließglied, wie eine Kugel, auf, und einen Ablasssitz, wobei zwischen dem Schließglied, dem Regelkolben und einem stationären Anschlag ein Regelbewegungen des Regelkolbens relativ zum stationären Anschlag abgreifender Aufsteuermechanismus für das Schließglied des Ablassventils vorgesehen ist. Das Ablassventil wird somit erst oder nur dann betätigt, wenn der an der Regelfeder eingestellte Regeldruck überschritten wird, wobei das Ablassventil stets nur eine geringe Korrektur-Druckmittelmenge zu verarbeiten hat und deshalb kompakt, baulich einfach und funktionssicher ist.

Zweckmäßig wird das Ablassventil zusammen mit dem Strömungsweg im Regelkolben angeordnet, so dass sich das Druckregel-Sitzventil sehr kompakt und sogar als Einschraubventil oder Einschraubpatrone ausbilden lässt.

Bei einer baulich einfachen Ausführungsform ist der stationäre Anschlag des Aufsteuermechanismus ein den Regelkolben mit axialem Spiel durchsetzender, in einem Gehäuse des Ventils festgelegter Stift, und ist im Regelkolben eine auf den Stift ausgerichtete, durch den Ablasssitz am Schließglied des Ablassventils einwirkende Ventilnadel vorgesehen, die im Regelkolben geführt wird. Auf diese Weise lässt sich die Relativbewegung des Regelkolbens gegenüber dem stationären Anschlag sehr exakt abgreifen und zum Betätigen des Ablassventils nutzen.

Zweckmäßig führt der Ablassanschluss zu einem Rücklauf eines Hydrauliksteuerkreises, oder alternativ in eine Federkammer der Regelfeder, und gegebenenfalls von dort zu einem Rücklauf oder einer Niederdruckseite des Hydrauliksteuerkreises.

Falls das Druckregel-Sitzventil für sehr hohe Arbeitsdrücke verwendbar sein soll, beispielsweise bis zu 500 bar oder mehr, ist es zweckmäßig, die Beaufschlagungsfläche des Regelkolbens so klein wie möglich zu wählen, um eine leichte und kleine Regelfeder benutzen zu können (Einsparung an Gewicht und Bauraum). Da es dann schwierig sein kann, das Ablassventil und den Strömungsweg in den Regelkolben einzugliedern, ist bei einer alternativen Ausführungsform, beispielsweise für höhere Arbeitsdrücke, das Ablassventil zusammen mit dem Strömungsweg zum Ablassanschluss vom Regelkolben getrennt angeordnet, und wird das Druckregel-Sitzventil, vorzugsweise, in ein Blockgehäuse eingegliedert oder in Blockbauweise gestaltet.

Im letztgenannten Fall ist zweckmäßigerweise der stationäre Anschlag des Aufsteuermechanismus ein in einem Gehäuse oder einem Block festgelegtes Lager eines zweiarmigen Hebels, dessen eines Ende mit dem Regelkolben mechanisch gekoppelt ist, und dessen anderes Ende die am Schließglied des Ablassventils angreifende Ventilnadel betätigt.

Es ist möglich, den Regelkolben mit einer engen Dichtpassung zu führen. Da jedoch gegebenenfalls an den Enden des Regelkolbens stark verschiedene Drücke vorliegen, und auch im Mittelbereich des Regelkolbens ein anderer Druck herrscht, ist es zweckmäßig, den Regelkolben zwischen dem Ablassanschluss und der Federkammer einerseits bzw. dem Regeldruckanschluss andererseits jeweils mit einer Gleitdichtung zu versehen.

Baulich einfach wird in den Regelkolben bei einer Ausführungsform ein im Achsschnitt trompetenförmiger Stößel eingesetzt, in dem bereits ein Teil des Strömungsweges, eine Schließfeder des Schließgliedes, und das Schließglied des Ablassventils angeordnet sind. Diese Komponenten sind bequem vorfertigbar und leicht montierbar.

Das Schließglied des Ablassventils ist zweckmäßig eine Kugel. Der Durchmesser dieser Kugel ist entweder gleich wie oder kleiner als der Durchmesser der Kugel des Hauptschließgliedes, wobei auch der Ablasssitz höchstens gleich groß wie oder kleiner als der Hauptsitz sein sollte. Das Ablassventil braucht nämlich, wie erwähnt, nicht die gesamte Druckmittelmenge zu verarbeiten, sondern eine relativ kleine, nur zur Drucksenkung erforderliche Druckmittelmenge, und kann deshalb kleiner ausgebildet sein, als das Hauptsitzventil. Durch eine kleinere Kugel bzw. einen kleineren Sitz im Ablassventil wird das Ansprechverhalten des Ablassventils feinfühliger, d.h. die Schließkräfte und Öffnungskräfte sind klein und es kann eine kleinere Schließfeder verwendet werden. Insgesamt ist der Bauraum zum Unterbringen des Ablassventils klein.

Da das Druckregel-Sitzventil bauartbedingt zuverlässig eine Regeldrucküberhöhung vermeidet, ist es zweckmäßig, das Druckregel-Sitzventil mit einem durch den Regelkolben betätigten Druckschalter zu kombinieren, der einer übergeordneten elektronischen Steuerung ein Signal liefert, das die zuverlässige Information dafür ist, dass der Regeldruck erreicht ist, und sich nicht mehr erhöhen kann. Die Regelfeder als einzige Einstellmöglichkeit des Druckregel-Sitzventils dient dann auch zur Einstellung des Druckschalters, und ist somit für drei Sektionen des Druckregel-Sitzventils verantwortlich, nämlich für die Druckregelfunktion, die Ablassfunktion und die Druckschalterfunktion.

Üblicherweise ist die Regelfeder mechanisch verstellbar. Es ist jedoch denkbar, eine elektrohydraulische Proportionalverstellung der Regelfeder vorzusehen, so dass das Druckregel-Sitzventil ferneinstellbar ist, oder sogar bei einem Stromausfall eine Regelfedereinstellung garantiert wird, die entweder einem vorbestimmten höheren oder einem niedrigeren Regeldruckwert zugeordnet ist.

Eine bevorzugte Ausführungsform, die hinsichtlich der Montage des Schließgliedes und der Ventilnadel für das Ablassventil montagetechnisch günstiger ist und den Durchsatz zum Ablassanschluss entlang der Ventilnadel beliebig wählen lässt, zeichnet sich dadurch aus, dass das Schließglied des Ablassventils mit der Ventilnadel und einem Führungskolben für das Schließglied und die Ventilnadel als einstückige Einheit ausgebildet und eingesetzt ist. Diese Einheit ist auch herstellungstechnisch günstig und lässt sich sowohl bei einer Ausbildung des Druckregel-Sitzventils als Einschraubventil als auch bei Blockbauweise verwenden.

Hierbei ist es zweckmäßig, wenn das Ablassventil das Schließglied mit kugeliger oder kegeliger Schließfläche und einen Ablasssitz entweder im Regelkolben selbst oder in einem Blockgehäuse aufweist, wobei zwischen dem Schließglied, dem Regelkolben und einem stationären Anschlag eines Einschraub- oder eines Blockgehäuses ein Regelbewegungen des Regelkolbens relativ zum stationären Anschlag mittels der Ventilnadel abgreifender Aufsteuermechanismus für das Schließglied vorgesehen ist. Das Ablassventil wird somit erst oder nur dann betätigt, wenn der an der Regelfeder eingestellte Regeldruck eine unzulässige Überhöhung erfährt, wobei das Ablassventil dann nur eine geringfügige Druckmittelmenge abzulassen hat. Deshalb lässt sich das Ablassventil kompakt, baulich einfach und funktionssicher gestalten.

Zur Betätigung des Hauptventils ist zweckmäßig in den Regelkolben ein am Hauptschließglied angreifender Stößel mit einem hohlen Schaft eingesetzt, beispielsweise eingepresst oder eingeschraubt. Der Führungskolben der Einheit aus Schließglied für das Ablassventil, Ventilnadel und Führungskolben ist entweder in einer Bohrung des Regelkolbens und/oder im Schaft des Stößels in Ausrichtung auf den Ablasssitz verschiebbar geführt. Die Ventilnadel durchsetzt in Ausrichtung auf den stationären Anschlag eine Bohrung im Regelkolben mit Spiel. Durch das Spiel lässt sich der Durchsatz und damit das Ansprechverhalten des Ablassventils optimieren, wobei die Ventilnadel keiner eigenen Führung bedarf.

Ferner ist es zweckmäßig, wenn der Führungskolben von einer im Schaft des Stößels angeordneten Feder in Schließrichtung des Ablassventils beaufschlagt ist. Diese Feder kann relativ schwach sein, da sie nur sicherzustellen hat, dass im drucklosen Zustand das Ablassventil geschlossen ist. Ferner kann im Führungskolben als Teil des Strömungsweges zum Ablassanschluss wenigstens ein Querdurchlass vorgesehen sein, über den beim Beseitigen einer Regeldrucküberhöhung die Korrekturmenge des Druckmittels zum Ablasssitz strömen kann.

Schließlich ist es zweckmäßig, wenn der Führungskolben bei Blockbauweise des Druckregel-Sitzventils im Blockgehäuse in einer zum Strömungsweg gehörenden, den Ablasssitz aufweisenden Bohrung zwischen dem Regelanschluss und dem Ablassanschluss geführt ist, oder in einem dort montierten Einsatz, und die Ventilnadel den Ablasssitz und eine anschließende Bohrung mit Spiel durchsetzt und durch einen Arm eines im stationären Anschlag gelagerten zweiarmigen Hebels zum Öffnen des Ablassventils betätigbar ist. Da die Ventilnadel durch den Führungskolben ordnungsgemäß geführt ist, lässt sich das Spiel zwischen der Ventilnadel und der Bohrung so gestalten, dass der Durchsatz für die Korrekturmenge des Druckmittels und damit das Ansprechverhalten des Ablassventils optimiert sind.

Anhand der Zeichnungen werden Ausführungsformen des Erfindungsgegenstandes erläutert. Es zeigen:
- Fig. 1: einen Längsschnitt durch ein Druckregel-Sitzventil, in drucklosem Zustand,
- Fig. 2: einen vergrößerten Detailschnitt des Druckregel-Sitzventils in einer Betriebsphase, in der eine Regeldrucküberhöhung droht,
- Fig. 3: einen Detailschnitt entsprechend dem von Fig. 2, einer anderen Ausführungsform,
- Fig. 4: einen Achsschnitt einer weiteren Ausführungsform in Blockbauweise,
- Fig. 5: einen Längsschnitt einer weiteren Ausführungsform des Druckregel-Sitzventils,
- Fig. 6: einen Längsschnitt einer weiteren Ausführungsform eines Druckregel-Sitzventils,
- Fig. 7: einen vergrößerten Detailschnitt zu Fig. 6, und
- Fig. 8: eine Schemadarstellung einer weiteren Ausführungsform des Druckregel-Sitzventils in Blockbauweise, analog zu Fig. 4.

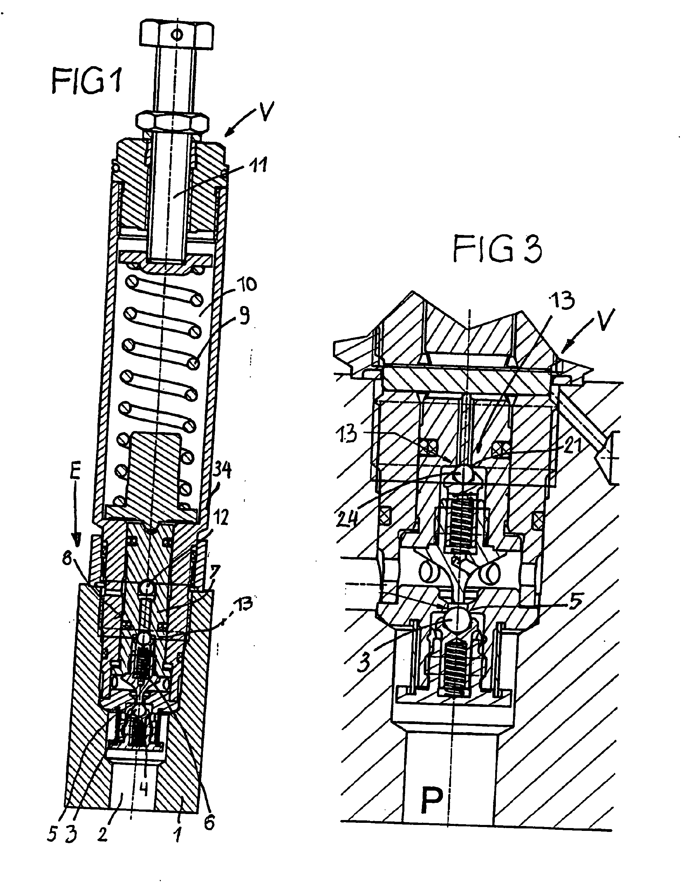

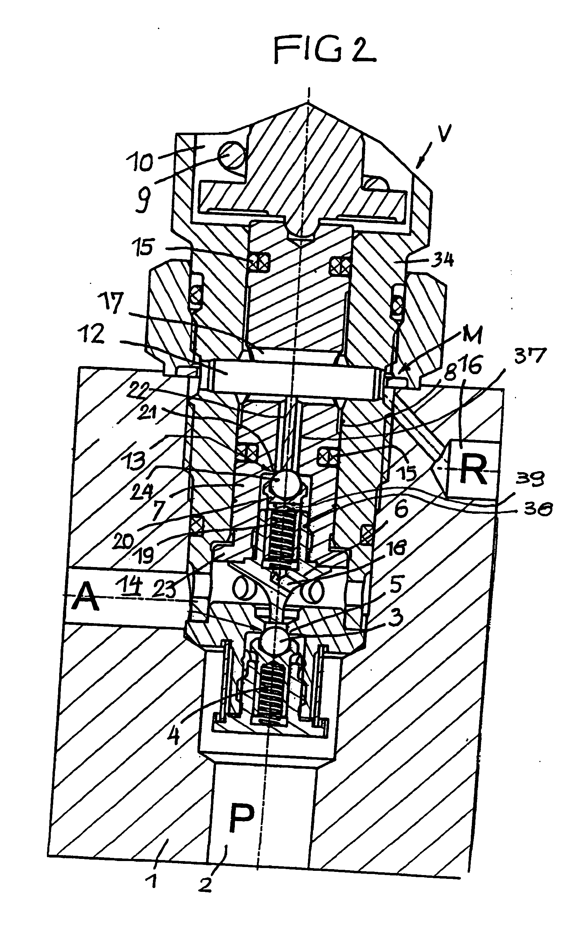

Ein in den Fig. 1 und 2 gezeigtes Druckregel-Sitzventil V ist allgemein für Hydrauliksteuerkreise verwendbar, in welchen ein Regeldruck A einer bestimmten Höhe einzustellen und zu halten ist, und im Besonderen für elektrohydraulische Spannvorrichtungen in Werkzeugmaschinen, die im Abschaltbetrieb betrieben werden. Das Druckregel-Sitzventil V ist beispielsweise als Einschraubventil oder Einschraubpatrone E ausgebildet und in einen Block 1 eingeschraubt, in welchem ein Versorgungsdruckanschluss 2, ein Regeldruckanschluss 14 und, vorzugsweise, ein Ablassanschluss 16 vorgesehen sind, zwischen denen das Druckregel-Sitzventil V arbeitet.

Das Druckregel-Sitzventil V weist ein Hauptschließglied 3, z.B. eine Kugel, auf, die stromauf eines Hauptsitzes 5 zwischen dem Druckversorgungsanschluss 2 und dem Regeldruckanschluss 14 angeordnet ist. Das Hauptschließglied 3 wird durch eine Schließfeder 4 in Schließrichtung beaufschlagt. Durch den Hauptsitz 5 erstreckt sich ein im Achsschnitt trompetenförmiger Stößel 6, der mit einem oberen hohlen Schaft 38 in einem Regelkolben 7 montiert oder in diesen eingesetzt oder eingeschraubt ist. Der Regelkolben 7 ist an der Stromabseite des Hauptsitzes 5 in einer zylindrischen Kammer 8 abgedichtet verschieblich ist, die zu einer Federkammer 10 mit einer den Regelkolben 7 beaufschlagenden Regelfeder 9 führt. Die Vorspannung der Regelfeder 9 ist mittels einer Einstellschraube 11 mechanisch einstellbar und bestimmt den Wert des im Regeldruckanschluss 14 einzustellenden Regeldrucks. Anstelle der Einstellschraube 11 (oder mit dieser kombiniert) könnte auch eine elektrohydraulische Proportionaleinstellvorrichtung (nicht gezeigt) für die Vorspannung der Regelfeder 9 vorgesehen sein, um das Druckregel-Sitzventil elektrisch ferngesteuert einstellen zu können, oder zumindest zwei unterschiedliche Vorspannungen der Regelfeder 9 fern einstellen zu können.

In einem die Federkammer 10 enthaltenden Einschraubgehäuse 34 des Druckregel-Sitzventils ist ein stationärer Anschlag 12 vorgesehen. Ferner ist in dem Regelkolben 7 ein Ablassventil 13 in Sitzventilbauweise enthalten, so dass das Zweiwege-Druckregel-Sitzventil V die Funktion eines Drei-Wege-Sitzventils erfüllt.

Gemäß Fig. 2 ist der Regelkolben 7 in seinem zur Federkammer 10 weisenden Endbereich und an dem zwischen dem gehäusefesten Anschlag 12 und dem Hauptsitz 5 liegenden Gleitbereich jeweils mit einer Gleitdichtung 15 versehen. Der gehäusefeste Anschlag 12 ist ein Querstift im Einschraubgehäuse 34, der eine mit axialem Übermaß ausgebildete Querbohrung 17 des Regelkolbens 7 durchsetzt und Teil eines Aufsteuermechanismus M für das Ablassventil 13 ist. Vom Regeldruckanschluss 14 erstreckt sich ein Strömungsweg 18 durch den Stößel 6 und eine Bohrung 37 im Regelkolben 7 bis in die Querbohrung 17 und von dieser (nicht gezeigt) beispielsweise zum Ablassanschluss 16.

Im Stößel 6 ist eine Schließfeder 19 für ein Schließglied 24, z.B. eine Kugel, des Ablassventils 13 montiert, wobei das Schließglied 24 von einem im Schaft 38 des Stößels 6 verschiebbar geführten Schließgliedhalter 20 gehalten sein kann. Im Strömungsweg 18 ist im Regelkolben 7 stromab des Schließgliedes 24 ein Ablasssitz 21 vorgesehen. Im Regelkolben 7 ist in der zum Ablassanschluss 16 führenden Bohrung 37 eine Ventilnadel 22 axial verschiebbar geführt, die auf den stationären Anschlag 12 und das Schließglied 24 ausgerichtet ist. Die Ventilnadel 22 ist beispielsweise an beiden Seiten abgeflacht, um Druckmittel vom Ablasssitz 21 durch die Bohrung 37 zur Querbohrung ablassen zu können. Am unteren Ende des Regelkolbens 7 ist ein erweiterter Bund 23 angeformt, der zum Dämpfen von Bewegungen des Regelkolbens 7 mit der umgebenden Wand einen Drosseldurchgang bildet. Zum Einstellen des Regeldrucks, des Ansprechverhaltens des Hauptsitzventils 3, 5 und des Ansprechverhaltens des Ablassventils 13 dient die gemeinsame Regelfeder 9. Die Schließglieder 24, 3 (und die Sitze) sind beide gleich groß. Der Strömungsweg 18 besitzt im Schließgliedhalter 20 Querdurchlässe 39, die eine Strömungsverbindung vom Inneren des Stößels 6 bis zum Ablasssitz 21 bilden.

### Funktion:

In dem in Fig. 1 gezeigten drucklosen Zustand hält die Regelfeder 9 das Hauptsitzventil 3, 5 offen. Sobald sich im Druckversorgungsanschluss 12 (Pumpendruck P) Druck aufbaut, steigt auch der Druck im Regeldruckanschluss 14. Das Ablassventil 13 ist in der leckagefreien Absperrstellung, da die Ventilnadel 22 vom gehäusefesten Anschlag 12 einen Abstand hat. Je mehr sich der Druck im Regeldruckanschluss 14 dem eingestellten Regeldruck A nähert, desto weiter wird der Regelkolben 7 gegen die Regelfeder 9 nach oben verschoben, so dass sich das Hauptschließglied 3 dem Hauptsitz 5 nähert, und zu drosseln beginnt, bis der an der Regelfeder 9 eingestellte Regeldruck A im Regeldruckanschluss 14 erreicht ist. Dann sperrt das Hauptschließglied 3 am Hauptsitz 5 leckagefrei dicht ab (Fig. 2). Das Ablassventil 13 ist ebenfalls leckagefrei dicht abgesperrt, so dass der Regeldruck A gehalten wird, selbst wenn der Pumpendruck P im Abschaltbetrieb abgebaut wird, oder unter den Regeldruck A sinkt. Sinkt bei ordnungsgemäßem Pumpendruck P der Regeldruck A unter den eingestellten Wert, beispielsweise aufgrund Verbrauchs eines angeschlossenen Verbrauchers, dann drückt die Regelfeder 9 den Regelkolben 7 nach unten, bis der Stößel 6 das Hauptventil 3, 5 erneut öffnet und Druckmittel nachgespeist wird, bis der Regeldruck A wieder erreicht ist.

Sollte aus irgendwelchen Gründen bei geschlossenem Hauptventil 3, 5 der Regeldruck A überschritten werden, z.B. aufgrund eines Temperaturanstiegs auf der Verbraucherseite, dann wird der Regelkolben 7 durch die Druckerhöhung gegen die Regelfeder 9 weiter nach oben verschoben, bis die Ventilnadel 22 den gehäusefesten Anschlag 12 erreicht und das Ablassventil 13 öffnet. Über den Strömungsweg 18 strömt Druckmittel aus dem Druckregelanschluss 14 zum Ablassanschluss 16 ab, bis der korrekte Wert des Regeldrucks A wieder erreicht ist. Der Regelkolben 7 ist dann wieder unten, und das Ablassventil 13 ist wieder in der Absperrstellung.

Die Ausführungsform des Druckregel-Sitzventils V in Fig. 3 unterscheidet sich von der der Fig. 1 und 2 dadurch, dass das Ablassschließglied 24 (eine Kugel) und der Ablasssitz 21 kleiner sind als das Hauptschließglied 3 und der Hauptsitz 5. Diese Maßnahme ist zweckmäßig, weil das Ablassventil 13 zum Abbauen der Regeldrucküberhöhung nur eine kleine Druckmittelmenge zu verarbeiten hat, und ein kleinerer Ablasssitz 21 bzw. ein kleineres Ablassschließglied 24 eine geringere, vom Regeldruck abhängige Schließkraft, erzielen lassen, was das Ansprechverhalten des Ablassventils 13 verbessert. Außerdem wird Bauraum gespart.

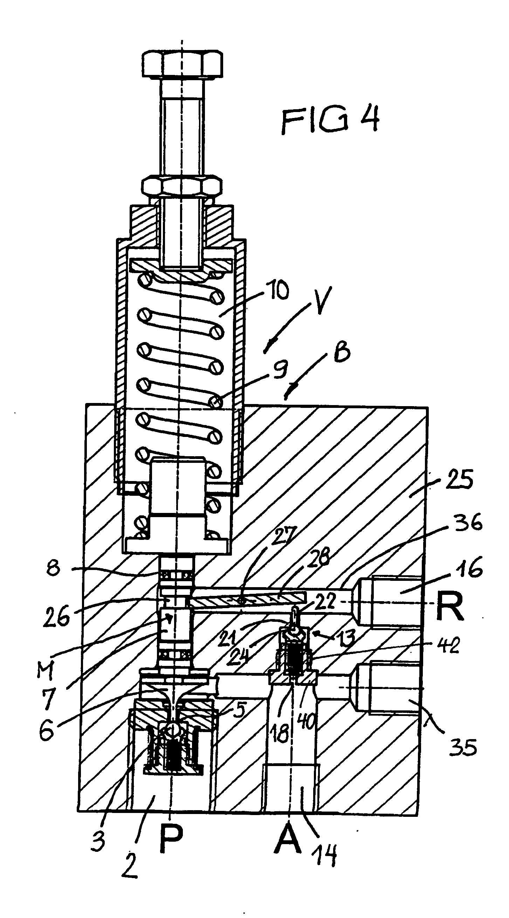

Das in Fig. 4 gezeigte Druckregel-Sitzventil V ist in Blockbauweise B erstellt, beispielsweise wegen eines sehr hohen Arbeitsdruckbereiches von 500 bar oder mehr. In diesem Fall ist der Regelkolben 7 relativ klein, um mit einer kleinbauenden und leichten Regelfeder 9 auszukommen. Dadurch könnte es Probleme geben, den Strömungsweg 18 und das Ablassventil 13 baulich in den Regelkolben zu integrieren, wie in den Fig. 1 bis 3. Das Hauptsitzventil 3, 5 ist deshalb in Fig. 4 in einem Gehäuseblock 25 montiert, der den Druckversorgungsanschluss 2, den Regeldruckanschluss 14 und den Ablassanschluss 16 aufweist. Ferner ist als Option ein Anschluss 35 zum Anschließen eines Manometers vorgesehen. Das Ablassventil 13 ist im Strömungsweg 18 vom Regeldruckanschluss 14 zum Ablassanschluss 16 untergebracht, wobei der Ablasssitz 21 im Gehäuseblock 25 ausgebildet ist. Die Ventilnadel 22 ragt in eine Bohrung 36, die vom Ablassanschluss 16 zu einem Mittelbereich der Zylinderkammer 8 des Regelkolbens 7 führt. Ein stationärer Anschlag 27 in Form eines Lagers ist in der Bohrung 36 im Gehäuseblock 35 vorgesehen. Auf dem Lager ist ein zweiarmiger Hebel 28 kippbar gelagert, dessen eines Ende in eine Nut 26 des Regelkolbens 7 eingreift, und dessen anderes Ende die Ventilnadel 22 zu betätigen vermag, sobald der Regelkolben 7 bei Überschreiten des an der Regelfeder 9 eingestellten Regeldrucks A gegen die Regelfeder 9 weiter nach oben verschoben wird als in Fig. 4 gezeigt.

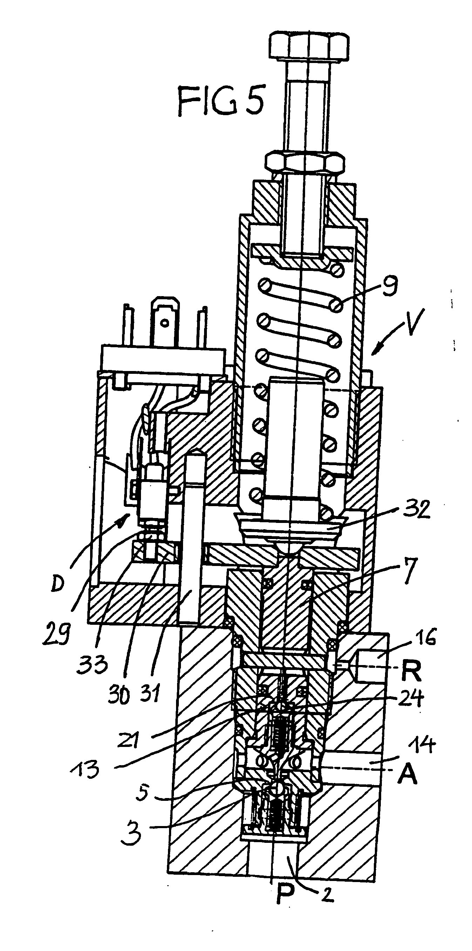

Die Ausführungsform des Druckregel-Sitzventils in Fig. 5 entspricht der der Fig. 3 (das Ablassschließglied 24 ist eine kleinere Kugel als das Hauptschließglied 3, und der Ablasssitz 21 hat einen kleineren Durchmesser als der Hauptsitz 5). Das Druckregel-Sitzventil V in Fig. 5 ist mit einem elektrischen Druckschalter D kombiniert, der ein Betätigungsglied 29 aufweist, welches über ein Querjoch 30 mit dem Regelkolben 7 bewegungsübertragend gekoppelt ist. Das parallel zum Regelkolben 7 geführte Querjoch 30 ist zwischen einem Widerlager 32 der Regelfeder 9 und dem Regelkolben 7 eingespannt. Mittels Kontermuttern 23 ist eine optionale Verstellmöglichkeit für den Schaltpunkt des Druckschalters D vorgesehen. Grundsätzlich wird der Ansprech- oder Schaltpunkt des Druckschalters D jedoch zusammen mit der Vorspannung der Regelfeder 9 eingestellt.

Der Druckschalter D meldet mit einem Signal beispielsweise das Erreichen des korrekten Regeldrucks A im Regeldruckanschluss 14, wobei dieses Signal für eine übergeordnete elektronische Steuervorrichtung eine zuverlässige Information ist, da wegen des Ablassventils 13 eine Regeldrucküberhöhung vermieden wird. In Fig.5 dient die gemeinsame Regelfeder 9 zum Einstellen des Ansprechens des Druckschalters D, des Hauptsitzventils 3, 5 und des Ablassventils 13.

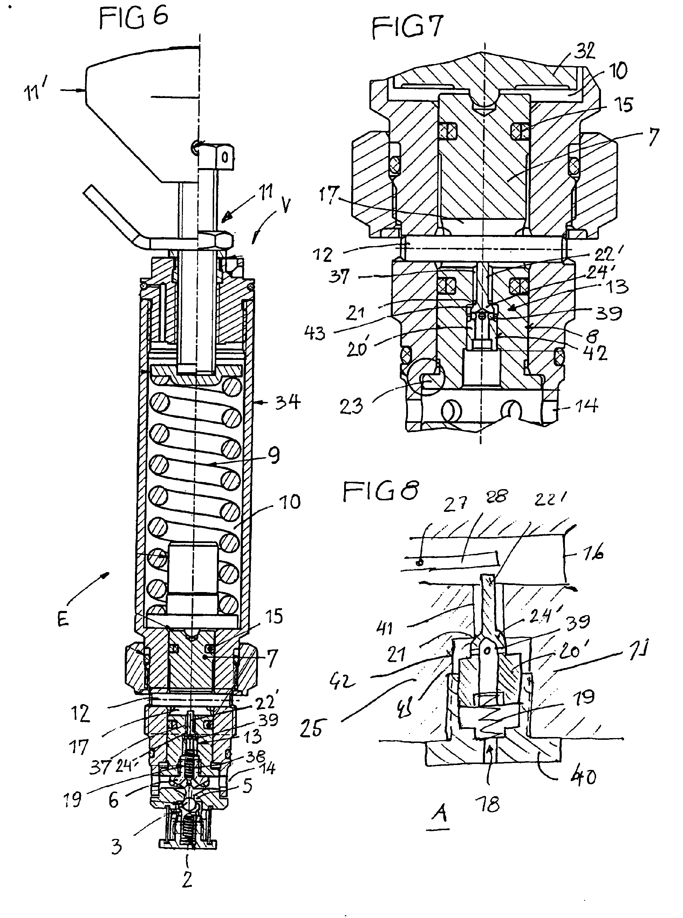

Die in den Fig. 6 und 7 gezeigte Ausführungsform des Druckregel-Sitzventils V ist als Einschraubventil oder Einschraubpatrone E ausgebildet und wird analog zu Fig. 1 in einen Block eingeschraubt, der (nicht gezeigt) einen Versorgungsdruckanschluss, einen Regeldruckanschluss und, vorzugsweise, einen Ablassanschluss 16 aufweist.

Das Druckregel-Sitzventil V in Fig. 6 weist das Hauptschließglied 3 stromauf des Hauptsitzes 5 auf. Das Hauptschließglied 3 wird durch die Schließfeder 4 in Schließrichtung beaufschlagt. Der Stößel 6, der mit einem oberen hohlen Schaft 38 in einen Regelkolben 7 eingeschraubt ist, erstreckt sich durch den Hauptsitz 5 zum Hauptschließglied 3. Der Regelkolben 7 ist an der Stromabseite des Hauptsitzes 5 in einer zylindrischen Kammer 8 des Einschraubgehäuses 34 abgedichtet verschieblich, die zur Federkammer 10 mit der den Regelkolben 7 beaufschlagenden Regelfeder 9 führt. Die Vorspannung der Regelfeder 9 ist mittels der Einstellschraube 11, 11' entweder mechanisch fest eingestellt oder verstellbar und bestimmt den Wert des Regeldruckanschlusses 14 einzustellenden Regeldrucks A. Anstelle der Einstellschraube 11, 11' (oder mit dieser kombiniert) könnte auch eine elektrohydraulische Proportionaleinstellvorrichtung (nicht gezeigt) vorgesehen sein.

Im die Federkammer 10 enthaltenden Einschraubgehäuse 34 ist der stationäre Anschlag 12 vorgesehen. Im Regelkolben 7 ist das Ablassventil 13 in Sitzventilbauweise enthalten.

Gemäß Fig. 7 ist der Regelkolben 7 mit zwei axial beabstandeten Gleitdichtungen 15 versehen. Der gehäusefeste Anschlag 12 ist ein Querstift im Einschraubgehäuse 34, der die mit axialem Übermaß ausgebildete Querbohrung 17 des Regelkolbens 7 durchsetzt und Teil des Aufsteuermechanismus M für das Ablassventil 13 ist. Vom Regeldruckanschluss 14 erstreckt sich ein Strömungsweg 18 durch den Stößel 6 und eine Bohrung 37 im Regelkolben 7 bis in die Querbohrung 17 und von dieser (nicht gezeigt) beispielsweise zum Ablassanschluss 16. Im Stößel 6 ist im Schaft 38 die Schließfeder 19 für das Schließglied 24' des Ablassventils 13 montiert, wobei das Schließglied 24' zusammen mit einem Führungskolben 20' und einer Ventilnadel 22' eine einstückige Baueinheit bilden. Im Regelkolben 7 ist stromab des Schließgliedes 24' der Ablasssitz 21 geformt, von dem sich eine Bohrung 37 bis zur Querbohrung 17 im Regelkolben 7 erstreckt. Die Ventilnadel 22' durchsetzt die Bohrung 37 mit allseitigem Spiel und ist auf den stationären Anschlag 12 ausgerichtet. Am unteren Ende des Regelkolbens 17 ist der Bund 23 angeformt, der als Dämpfungseinrichtung mit der umgebenden Wand einen Drosseldurchgang bildet. Zum Einstellen des Regeldrucks A, des Ansprechens des Hauptsitzventils 3, 5 und des Ansprechens des Ablassventils 13 dient die gemeinsame Regelfeder 9. Die Schließglieder 24', 3 (und die Sitze) sind in etwa gleich groß. Der Strömungsweg 18 besitzt im Führungskolben 20' Querdurchlässe 39, die eine Strömungsverbindung vom Inneren des Stößels 6 bis zum Ablasssitz 21 bilden. Das Schließglied 24' hat eine kugelige oder kegelige Sitzfläche 43. Die Einheit aus Schließglied 24', Führungskolben 20' und Ventilnadel 22' ist beispielsweise ein Drehteil aus Stahl.

Die Funktion des Druckregel-Sitzventils V entspricht der oben erläuterten Funktion.

Bei einer nicht gezeigten Ausführungsform könnte der Durchmesser des für die Einheit aus Ventilnadel 22', Führungskolben 20' und Schließlied 24' vorgesehene Ablasssitzes 21 auch kleiner als der Durchmesser des Hauptsitzes 5 sein.

Fig. 8 zeigt analog zu Fig. 4 einen Ausschnitt des Druckregel-Sitzventils V in Blockbauweise mit dem Blockgehäuse 25. Das Ablassventil 13 ist getrennt vom Regelkolben 7 angeordnet und wird durch einen Arm des zweiarmigen Hebels 28 betätigt, der im stationären Anschlag 27 gelagert ist und die Regelbewegungen des Regelkolbens 7 abgreift.

Die Einheit aus Ventilnadel 22', Schließglied 24' und Führungskolben 20' ist hier in einem in eine Bohrung 42 im Blockgehäuse 25 eingeschraubten Einsatz 40 (oder der Bohrung 42 selbst) mittels des Führungskolbens 20' verschiebbar geführt und durch die Schließfeder 19 in Schließrichtung des Ablassventils 13 beaufschlagt. Im Einsatz 40 ist, kommunizierend mit dem Regelanschluss für den Regeldruck A, ein Teil des Strömungsweges 18 geformt. Im Schließglied 24' bzw. im Führungskolben 20' sind Querdurchlässe 39 als Teil des Strömungsweges 18 geformt. An den Ablasssitz 21 schließt sich eine Bohrung 41 an, die in einem zum Ablassanschluss 16 führenden Kanal des Blockgehäuses 25 mündet. Die Bohrung 41 wird von der vom Führungskolben 20' geführten ist die Ventilnadel 22' mit allseitigem Spiel so durchsetzt, dass das obere Ende der Ventilnadel 22' auf den zweiarmigen Hebel 28 ausgerichtet ist.

Obwohl dies in den Fig. 6 bis 8 nicht gezeigt ist, lässt sich das jeweilige Druckregel-Sitzventil V mit einem Druckschalter D analog zu Fig. 5 kombinieren, wobei der Druckschalter D im oder am Druckregel-Sitzventil V so angeordnet wird, dass sein Betätigungsglied 29 die Regelbewegungen des Regelkolbens 7 abgreift. Der Druckschalter D könnte, wie in Fig. 5, seitlich neben dem Regelkolben 7 platziert werden, oder gegebenenfalls sogar in der Federkammer 10. Da die vom Regelkolben 7 den ordnungsgemäßen Regeldruck A repräsentierende Position unabhängig ist von der eingestellten Vorspannung der Regelfeder 9, stellt die Einstellung der Vorspannung der Regelfeder 9 auch den Schaltpunkt des Druckschalters D ein.

Die einstückige Baueinheit aus Ventilnadel 22', Schließglied 24' und Führungskolben 20' im Ablassventil 13 ist herstellungs- und montagetechnisch günstig. Auch lassen sich durch das allseitige Spiel der vom Führungskolben geführten Ventilnadel 22' der Durchsatz des Ablassventils 13 zum Kompensieren einer Regeldrucküberhöhung und das Ansprechverhalten optimieren.

## Patentansprüche

1. Druckregel-Sitzventil (V) für Hydrauliksysteme, insbesondere für Werkzeugmaschinen-Spannvorrichtungen, mit einem zwischen einem Versorgungsdruckanschluss (2) und einem Regeldruckanschluss (14) angeordneten Hauptsitz (5), dem stromauf ein federbelastetes Hauptschließglied (3) zugeordnet ist, das zum Einstellen des Regeldrucks (A) durch den Hauptsitz (5) von einem stromab des Sitzes (5) vom Regeldruck (A) gegen eine Regelfeder (9) beaufschlagten Regelkolben (7) mechanisch beaufschlagbar ist, **dadurch gekennzeichnet, dass** in einem Strömungsweg (18) zwischen dem Regeldruckanschluss (14) und einem Ablassanschluss (16) ein, bei einer Überhöhung des mit der Regelfeder (9) eingestellten Regeldrucks (A) bis zur Wiedereinstellung des Regeldrucks (A), mechanisch zum Ablassanschluss (16) aufsteuerbares Ablassventil (13) in Sitzventilbauweise angeordnet ist, und dass das Ansprechen des Ablassventils (13) und des Hauptschließgliedes (3) gemeinsam mittels der Regelfeder (9) einstellbar sind.

2. Druckregel-Sitzventil gemäß Anspruch 1, **dadurch gekennzeichnet, dass** das Ablassventil (13) ein federbelastetes Schließglied (24), vorzugsweise eine Kugel, und einen Ablasssitz (21) aufweist, und dass zwischen dem Schließglied (24), dem Regelkolben (7) und einem stationären Anschlag (12, 27) ein Regelbewegungen des Regelkolbens (7) relativ zum stationären Anschlag abgreifender Aufsteuermechanismus (M) für das Schließglied (24) vorgesehen ist.

3. Druckregel-Sitzventil nach Anspruch 1, **dadurch gekennzeichnet, dass** das Ablassventil (13) und der Strömungsweg (18) zumindest zum Teil im Regelkolben (7) angeordnet sind, und dass, vorzugsweise, das Druckregel-Sitzventil als Einschraubpatrone (E) ausgebildet ist.

4. Druckregel-Sitzventil nach Anspruch 3, **dadurch gekennzeichnet, dass** der stationäre Anschlag (12) des Aufsteuermechanismus (M) ein den Regelkolben (7) mit axialem Spiel durchsetzender, in einem Gehäuse festgelegter Stift ist, und dass im Regelkolben (7) eine auf den Stift ausgerichtete, durch den Ablasssitz (21) auf das Schließglied (24) wirkende Ventilnadel (22) geführt ist.

5. Druckregel-Sitzventil nach Anspruch 4, **dadurch gekennzeichnet, dass** der Ablassanschluss (16) in einen Rücklauf (R) oder eine Federkammer (10) der Regelfeder (9) mündet.

6. Druckregel-Sitzventil nach Anspruch 1, **dadurch gekennzeichnet, dass** das Ablassventil (13) und der Strömungsweg (18) vom Regelkolben (7) getrennt angeordnet sind, und dass, vorzugsweise, das Druckregel-Sitzventil (V) in Blockbauweise in ein Blockgehäuse (25) eingegliedert ist.

7. Druckregel-Sitzventil nach Anspruch 6, **dadurch gekennzeichnet, dass** der stationäre Anschlag (27) des Aufsteuermechanismus (M) ein in einem Block (25) festgelegtes Lager eines zweiarmigen Hebels (28) ist, dessen eines Ende mit dem Regelkolben (7) gekoppelt ist, und dessen anderes Ende eine am Schließglied (24) des Ablassventils (13) angreifende Ventilnadel (22) betätigt.

8. Druckregel-Sitzventil nach wenigstens einem der vorhergehenden Ansprüche, **dadurch gekennzeichnet, dass** der Regelkolben (7) zwischen dem Ablassanschluss (16) und der Federkammer (10) bzw. dem Regeldruckanschluss (14) jeweils eine Gleitdichtung (15) aufweist.

9. Druckregel-Sitzventil nach Anspruch 3, **dadurch gekennzeichnet, dass** in den Regelkolben (7) ein im Achsschnitt trompetenförmiger Stößel (6) eingesetzt ist, in dem ein Teil des Strömungspfades (18), eine Schließfeder (19) des Schließgliedes (24) und das Schließglied (24) angeordnet sind.

10. Druckregel-Sitzventil nach wenigstens einem der vorhergehenden Ansprüche, **dadurch gekennzeichnet, dass** das Schließglied (24) eine Kugel ist, deren Durchmesser höchstens gleich wie oder kleiner als der Durchmesser der Hauptschließglied-Kugel (3) ist, und dass der Ablasssitz (21) höchstens gleich groß wie oder kleiner als der Hauptsitz (5) ist.

11. Druckregel-Sitzventil nach wenigstens einem der vorhergehenden Ansprüche, **dadurch gekennzeichnet, dass** ein elektrischer Druckschalter (D) vorgesehen ist, der ein mit dem Regelkolben (7) gekoppeltes Betätigungsglied (29) aufweist, und, vorzugsweise, das Vorliegen des an der Regelfeder (9) eingestellten Regeldrucks (A) im Regeldruckanschluss (14) mit einem Signal bestätigt.

12. Druckregel-Sitzventil nach wenigstens einem der vorhergehenden Ansprüche, **dadurch gekennzeichnet, dass** die Vorspannung der Regelfeder (9) mechanisch oder über eine elektrohydraulische Proportionalverstellung verstellbar ist.

13. Druckregel-Sitzventil nach Anspruch 1, **dadurch gekennzeichnet, dass** ein Schließglied (24') des Ablassventils (13) mit einer Ventilnadel (22') und einem Führungskolben (20') für das Schließglied (24') und die Ventilnadel (22') einstückig ausgebildet ist.

14. Druckregel-Sitzventil nach Anspruch 13, **dadurch gekennzeichnet, dass** das Ablassventil (13) das Schließglied (24') mit kugeliger oder kegeliger Schließfläche (42) und einen Ablasssitz (21) aufweist, und dass zwischen dem Schließglied (24'), dem Regelkolben (7) und einem stationären Anschlag (12, 27) eines Einschraub- oder eines Blockgehäuses (34, 25) ein Regelbewegungen des Regelkolbens (7) relativ zum stationären Anschlag (12, 27) mittels der Ventilnadel (22') abgreifender Aufsteuermechanismus (M) für das Schließglied (24') vorgesehen ist.

15. Druckregel-Sitzventil nach Anspruch 14, **dadurch gekennzeichnet, dass** in den Regelkolben (7) ein am Hauptschließglied (3) angreifender Stößel (6) mit einem hohlen Schaft (38) eingesetzt ist, dass der Führungskolben (20') entweder in einer Bohrung (42) des Regelkolbens (7) und/oder im Schaft (38) in Ausrichtung auf den Ablasssitz (21) verschiebbar geführt ist, und dass die Ventilnadel (22') in Ausrichtung auf den stationären Anschlag (12) eine Bohrung (37) im Regelkolben (7) mit Spiel durchsetzt.

16. Druckregel-Sitzventil nach Anspruch 15, **dadurch gekennzeichnet, dass** der Führungskolben (20') von einer im Schaft (38) angeordneten Schließfeder (19) in Schließrichtung des Ablassventils (13) beaufschlagt ist, und dass im Führungskolben (20') als Teil des Strömungsweges (18) zum Ablassanschluss (16) wenigstens ein Querdurchlass (39) vorgesehen ist.

17. Druckregel-Sitzventil nach Anspruch 14, **dadurch gekennzeichnet, dass** der Führungskolben (20') im Blockgehäuse (25) entweder in einer zum Strömungsweg (18) gehörenden, den Ablasssitz (21) aufweisenden Bohrung (42) zwischen dem Regelanschluss (14) und dem Ablassanschluss (16) oder in einem in der Bohrung (42) angeordneten Einsatz (40) geführt ist, und dass die Ventilnadel (22') den Ablasssitz (21) und eine anschließende Bohrung (41) mit Spiel durchsetzt und durch einen Arm eines im stationären Anschlag (27) gelagerten, zweiarmigen Hebels (28) des Aufsteuermechanismus (M) zum Öffnen des Ablassventils (13) betätigbar ist.

## Claims

1. Pressure regulating seat valve (V) for hydraulic systems, in particular for tooling machine-clamping devices, comprising a main seat (5) arranged between a supply pressure port (2) and a regulated pressure port (14), a spring loaded main closure member (3) associated upstream to the main seat (5), which main closure member (3) is mechanically actuable for adjusting a regulated pressure through the main seat (5) by a regulating piston (7) loaded by the regulated pressure (A) downstream of the main seat (5) counter to a regulating spring (9), **characterized in that** a relief valve (13) built as a seat valve is arranged in a flow path (18) extending between the regulated pressure port (14) and a relief port (16), which relief valve (13) can be mechanically controlled to open toward the relief port (16) in case of excessive increase of the regulated pressure (A) as set by the regulating spring (9), until the regulated pressure (A) is re-established, and that the response of the relief valve (13) and of the main closure member (3) can be adjusted commonly be means of the regulating spring (9).

2. Pressure regulating seat valve according to claim 1, **characterized in that** the relief valve (13) comprises a spring-loaded closure member (24), preferably a ball, and a relief seat (21), and closure member (24) opening control mechanism (M) detecting regulating movements of the regulating piston (7) relative to a stationary stop (12, 27), the opening control mechanism (M) being arranged between the closure member (24), the regulating piston (7) and the stationary stop (12, 27).

3. Pressure regulating seat valve according to claim 1, **characterized in that** the relief valve (13) and the flow path (18) at least in part are arranged in the regulating piston (7) and that, preferably, the pressure regulating seat valve is a screw-in cartridge (E).

4. Pressure regulating seat valve according to claim 3, **characterized in that** the stationary stop (12) of the opening control mechanism (M) is a pin fixed in a housing and penetrating the regulating piston (7) with axial clearance, and that a valve needle (22) is guided in the regulating piston (7), which valve needle is aligned with the pin and engages on the closure member (24) through the relief seat (21).

5. Pressure regulating seat valve according to claim 4, **characterized in that** the relief port (16) opens into a return line (R) or a spring chamber (10) of the regulating spring (9).

6. Pressure regulating seat valve according to claim 1, **characterized in that** the relief valve (13) and the flow path (18) are arranged separated from the regulating piston (7), and that, preferably, the pressure regulating seat valve (V) structured as a block is incorporated into a block housing (25).

7. Pressure regulating seat valve according to claim 6, **characterized in that** the stationary stop (27) of the opening control mechanism (M) is a bearing of a double-armed lever (28), the bearing being fixed in a block (25), the lever (28) having one end coupled with the regulating piston (7), the other end of the lever (28) actuating a valve needle (22) engaging at the closure member (24) of the relief valve (13).

8. Pressure regulating seat valve according to at least one of the preceding claims, **characterized in that** the regulating piston (7) has a respective sliding sealing (15) between the relief port (16) and the spring chamber (10) or the regulated pressure port (14).

9. Pressure regulating seat valve according to claim 3, **characterized in that** a plunger (6) having in an axial section the shape of a trumpet, is inserted into the regulating piston (7), and that a part of the flow path (18), a closing spring (19) of the closure member (24) and a closure member (24) are arranged in the plunger (6).

10. Pressure regulating seat valve according to at least one of the preceding claims, **characterized in that** the closure member (24) is a ball the diameter of which maximally is equal to or smaller than the diameter of the main closure member (3), and that the relief seat (21) is maximally as large as or smaller than the main seat (5).

11. Pressure regulating seat valve according to at least one of the preceding claims, **characterized in that** an electric pressure switch (D) is provided comprising an actuating member (29) coupled with the regulating piston (7), and that the pressure switch (D), preferably, confirms the occurrence of the regulated pressure (A) set by the regulating spring (9) in the regulated pressure port (14) by a signal.

12. Pressure regulating seat valve according to at least one of the preceding claims, **characterized in that** the preload of the regulating spring (9) is variable mechanically or via an electro-hydraulic proportional adjustment system.

13. Pressure regulating seat valve according to claim 1, **characterized in that** a closure member (24') of the relief valve (13) is unitary with a valve needle (22') and a guiding piston (20') provided for both the closure member (24') and the valve needle (22').

14. Pressure regulating valve according to claim 13, **characterized in that** the relief valve (13) comprises the closure member (24') having a spherical or conical closure surface (42) and a relief seat (21), and that between the closure member (24'), the regulating piston (7) and a stationary stop (27, 12) of a screw-in housing or a block housing (34, 25) an opening control mechanism (M) is provided for the closure member (24'), the opening control mechanism (M) sensing by means of the valve needle (22') regulating movements of the regulating piston (7) relative to the stationary stop (12, 27).

15. Pressure regulating seat valve according to claim 14, **characterized in that** a plunger (6) having a hollow shaft (38) and engaging at the main closure member (3) is inserted into the regulating piston (7), that the guiding piston (20') is slideably guided either in a bore (42) of the regulating piston (7) and/or in the shaft (38) in alignment with the relief seat (21), and that the valve needle (22) is aligned with the stationary stop (12) and penetrates with clearance a bore (37) in the regulating piston (7).

16. Pressure regulating seat valve according to claim 15, **characterized in that** the guiding piston (20') is actuated in closing direction of the relief valve (13) by a closure spring (19) arranged in the shaft (38), and that at least one lateral passage (39) as part of the flow path (18) towards the relief port (16) is provided in the guiding piston (20').

17. Pressure regulating seat valve according to claim 14, **characterized in that** the guiding piston (20') is guided in the block housing (25) either in a bore (42) extending between the regulated pressure port (14) and the relief port (16), the bore (42) comprising the relief seat (21) and belonging to the flow path (18), or in an insert (40) arranged in the bore (42), and that the valve needle (22') penetrates with clearance the relief seat (21) and an adjacent bore (41) and is actuable by one arm of a double-armed lever (28) of the opening control mechanism (M) for opening the relief valve (13), the lever (28) being supported at the stationary stop (27).

## Revendications

1. Vanne à siège de régulation de pression (V) pour systèmes hydrauliques, en particulier pour dispositifs de serrage sur des machines-outils, avec un siège principal (5) agencé entre une connexion de pression d'alimentation (2) et une connexion de pression régulée (14), qui est placé en amont d'un élément de fermeture principal (3) précontraint par ressort, qui peut être actionné mécaniquement pour le réglage de la pression régulée (A) par le siège principal (5) d'un piston de réglage (7) en aval du siège (5) soumis à la pression régulée (A) opposée à un ressort de réglage (9), **caractérisée en ce qu'**une soupape d'échappement (13) à commande mécanique sur la connexion d'échappement (16), lors d'une surélévation de la pression régulée (A) réglée à l'aide du ressort de réglage (9) jusqu'au rétablissement de la pression régulée (A), est agencée selon une construction de type vanne à siège dans un chemin d'écoulement (18) entre la connexion de pression régulée (14) et une connexion d'échappement (16), et **en ce que** l'actionnement de la soupape d'échappement (13) et l'actionnement de l'élément de fermeture principal (3) peuvent être réglés conjointement à l'aide du ressort de réglage (9).

2. Vanne à siège de régulation de pression selon la revendication 1, **caractérisée en ce que** la soupape d'échappement (13) comporte un élément de fermeture précontraint par ressort (24), qui est préférablement une bille, et un siège d'échappement (21), et **en ce qu'**un déplacement de réglage du piston de réglage (7) est pourvu pour l'élément de fermeture (24) entre l'élément de fermeture (24), le piston de réglage (7) et une butée stationnaire (12, 27) par rapport au mécanisme de commande (M) qui entre en contact avec la butée stationnaire.

3. Vanne à siège de régulation de pression selon la revendication 1, **caractérisée en ce que** la soupape d'échappement (13) et le chemin d'écoulement (18) sont agencés au moins partiellement dans le piston de réglage (7), et **en ce que** la vanne à siège de régulation de pression est réalisée préférablement sous forme d'une cartouche à visser (E).

4. Vanne à siège de régulation de pression selon la revendication 3, **caractérisée en ce que** la butée stationnaire (12) du mécanisme de commande (M) est un axe agencé dans un boîtier et traversant le piston de réglage (7) avec un jeu axial, et **en ce qu'**une aiguille de soupape (22) orientée selon l'axe et agissant sur l'élément de fermeture (24) à travers le siège d'échappement (21) est guidée dans le piston de réglage (7).

5. Vanne à siège de régulation de pression selon la revendication 4, **caractérisée en ce que** la connexion d'échappement (16) aboutit dans un retour (R) ou dans une chambre de ressort (10) du ressort de réglage (9).

6. Vanne à siège de régulation de pression selon la revendication 1, **caractérisée en ce que** la soupape d'échappement (13) et le chemin d'écoulement (18) du piston de réglage (7) sont agencés séparément, et **en ce que** la vanne à siège de régulation de pression (V) est préférablement intégrée de manière modulaire dans un boîtier modulaire (25).

7. Vanne à siège de régulation de pression selon la revendication 6, **caractérisée en ce que** la butée stationnaire (27) du mécanisme de commande (M) est un support fixé dans un module (25) d'un levier à deux bras (28) dont une extrémité est accouplée au piston de réglage (7) et dont l'autre extrémité actionne une aiguille de soupape (22) qui entre en contact avec un élément de fermeture (24) de la soupape d'échappement (13).

8. Vanne à siège de régulation de pression selon au moins l'une des revendications précédentes, **caractérisée en ce que** le piston de réglage (7) présente chaque fois une étanchéité coulissante (15) entre la connexion d'échappement (16) et respectivement la chambre de ressort (10) ou la connexion de pression régulée (14).

9. Vanne à siège de régulation de pression selon la revendication 3, **caractérisée en ce qu'**un poussoir (6) en forme de trompette en coupe axiale, dans lequel sont agencés une partie du chemin d'écoulement (18), un ressort de fermeture (19) de l'élément de fermeture (24) et l'élément de fermeture (24), est monté dans le piston de réglage (7).

10. Vanne à siège de régulation de pression selon au moins l'une des revendications précédentes, **caractérisée en ce que** l'élément de fermeture (24) est une bille dont le diamètre est inférieur ou au plus égal au diamètre de la bille de l'élément de fermeture principal (3), et **en ce que** le siège d'échappement (21) est de taille inférieure ou au plus égale à celle du siège principal (5).

11. Vanne à siège de régulation de pression selon au moins l'une des revendications précédentes, **caractérisée en ce qu'**un pressostat électrique (D) est pourvu, qui comporte un élément d'actionnement (29) accouplé au piston de réglage (7) et qui préférablement confirme à l'aide d'un signal la présence de la pression régulée (A) réglée par le ressort de réglage (9) dans la connexion de pression régulée (14).

12. Vanne à siège de régulation de pression selon au moins l'une des revendications précédentes, **caractérisée en ce que** la précontrainte du ressort de réglage (9) peut être réglée mécaniquement ou via une régulation proportionnelle électrohydraulique.

13. Vanne à siège de régulation de pression selon la revendication 1, **caractérisée en ce qu'**un élément de fermeture (24') de la soupape d'échappement (13) est constitué d'une seule pièce avec une aiguille de soupape (22') et un piston de guidage (20') pour l'élément de fermeture (24') et l'aiguille de soupape (22').

14. Vanne à siège de régulation de pression selon la revendication 13, **caractérisée en ce que** la soupape d'échappement (13) comporte l'élément de fermeture (24') avec une surface de fermeture (42) en forme de bille ou de cône et un siège d'échappement (21), et **en ce qu'**un déplacement de réglage du piston de réglage (7) par rapport au mécanisme de commande (M) qui entre en contact avec la butée stationnaire (12, 27) à l'aide de l'aiguille de soupape (22') est pourvu pour l'élément de fermeture (24) entre l'élément de fermeture (24'), le piston de réglage (7) et une butée stationnaire (12, 27) d'un boîtier à visser ou modulaire (34, 25).

15. Vanne à siège de régulation de pression selon la revendication 14, **caractérisée en ce qu'**un poussoir (6) à tige creuse (38) qui entre en contact avec l'élément de fermeture principal (3) est agencé dans le piston de réglage (7), **en ce que** le piston de guidage (20') est guidé de manière coulissante dans un perçage (42) du piston de réglage (7) et/ou dans la tige (38) en alignement avec le siège d'échappement (21), et **en ce que** l'aiguille de soupape (22') traverse un perçage (37) dans le piston de réglage (7) avec un jeu, en alignement avec la butée stationnaire (12).

16. Vanne à siège de régulation de pression selon la revendication 15, **caractérisée en ce que** le piston de guidage (20') est actionné en direction de fermeture de la soupape d'échappement (13) par un ressort de fermeture (19) agencé dans la tige (38), et **en ce qu'**au moins un passage transversal (39) est pourvu dans le piston de guidage (20') comme partie constituant le chemin d'écoulement (18) pour la connexion d'échappement (16).

17. Vanne à siège de régulation de pression selon la revendication 14, **caractérisée en ce que** le piston de guidage (20') est mené dans le boîtier modulaire (25) soit dans un perçage (42) entre la connexion de régulation (14) et la connexion d'échappement (16), appartenant au chemin d'écoulement (18) et comportant le siège d'échappement (21), soit dans un insert (40) agencé dans le perçage (42), et **en ce que** l'aiguille de soupape (22') traverse le siège d'échappement (21) et un perçage adjacent (41) avec un jeu et peut être actionnée par un bras d'un levier à deux bras (28) du mécanisme de commande (M) supporté dans la butée stationnaire (27) pour ouvrir la soupape d'échappement (13).
